# EUROPEAN PATENT APPLICATION

(11) **EP 4 604 505 A1**
(43) Date of publication of application: **20.08.2025**
(21) Application number: 24823299.3
(22) Date of filing: 06.06.2024
(51) Int. Cl.: H04M 1/11, A45C 11/00, G06F 1/16, H05K 5/02

(54) **HOLDER FOR PORTABLE INFORMATION TERMINAL**

(30) Priority: 16.06.2023 JP 2023099251
(71) Applicant: Sprasann LLC, Tokyo 103-0022 (JP)
(72) Inventor: SAITO Norihiro, Tokyo 134-0081 (JP)
(74) Representative: Novaimo
(86) International application number: PCT/JP2024/020676
(87) International publication number: WO 2024/257683

(57) **Abstract**

A holder for a portable information terminal includes a case-side band portion 7 configured to be attached to a case 5 for a portable information terminal in which a portable information terminal is held, and a hand-side holding portion 3 configured to be attached to the case-side band portion 7 and to come into contact with a finger or a back of a hand, wherein the case-side band portion 7 is fixed to the case 5 by an elastic force of the case-side band portion 7, and wherein the hand-side holding portion 3 has both end portions thereof respectively connected to the case-side band portion 7 by ring-shaped members 9a and 9b.

## Description

### [Technical Field]

The present invention relates to a holder that enables a portable information terminal, such as a smartphone or a tablet, to be held stably, and that enables to prevent dropping thereof, when holding and using the portable information terminal in a hand.

### [Background Art]

Portable information terminals such as smartphones are mainly held in one hand and operated. Heretofore, holders for stably holding a portable information terminal in one hand have been proposed.

Patent Literature 1 discloses a ring cover that covers a drop prevention ring of a holder for a portable information terminal.

Patent Literature 2 discloses a sheet-shaped holder.

Patent Literature 3 discloses a band that is wound around a hardcase for a smartphone.

### [Citation List]

### [Patent Literature]

[Patent Literature 1] Japanese Patent Application Laid-Open Publication No. 2022-42096
[Patent Literature 2] Japanese Patent Application Laid-Open Publication No. 2019-125370
[Patent Literature 3] Publication of Japanese Utility Model Registration No. 3177647

### [Summary of Invention]

### [Problem to be Solved by the Invention]

A holder for a portable information terminal having a drop prevention ring disclosed in Patent Literature 1 and a sheet-shaped holder disclosed in Patent Literature 2 are fixed using an adhesive or an adhesive sheet to a main body of the portable information terminal or a case for the portable information terminal. Therefore, when an old holder is peeled off from the portable information terminal or the case for a portable information terminal to replace the holder, the adhesive may remain on the main body or the case. Further, according to the holder for a portable information terminal disclosed in Patent Literature 1, load is applied on a connecting portion between the drop prevention ring and a base portion, such that after being used for a while, the connecting portion may be broken by wear relatively at an early stage.

The band disclosed in Patent Literature 3 uses a member having an elastic property to form a portion that comes into contact with a finger of a hand or a back of a hand, such that the hand is elastically squeezed. Therefore, the band is not easily detached from the hand and prevented from dropping, but when the band is used for a long period of time, the hand may be hurt by being squeezed.

In consideration of the above-mentioned state, the present invention aims at providing a holder for a portable information terminal that enables the portable information terminal to be held stably, that has durability, and that does not cause the hand to be hurt even after being used for a long time.

### [Means to Solve the Problem]

In order to solve the problems described above, a holder for a portable information terminal according to the present invention includes a band portion configured to be attached to a case for a portable information terminal in which a portable information terminal is held, and a hand-side holding portion configured to be attached to the band portion and to come into contact with a finger or a back of a hand, wherein the band portion is fixed to the case by an elastic force of the band portion, and wherein the hand-side holding portion has both end portions thereof respectively connected to the band portion by a ring-shaped member.

### [Effects of Invention]

According to the present invention, a holder for a portable information terminal that enables the portable information terminal to be held stably, that has durability, and that does not cause the hand to be hurt even after being used for a long time may be provided.

### [Brief Description of Drawings]

FIG. 1 is a front view of a holder for a portable information terminal according to an embodiment.
FIG. 2 is a rear view of the holder for a portable information terminal according to the embodiment.
FIG. 3 is a plan view of the holder for a portable information terminal according to the embodiment.
FIG. 4 is a bottom view of the holder for a portable information terminal according to the embodiment.
FIG. 5 is a left side view of the holder for a portable information terminal according to the embodiment.
FIG. 6 is a right side view of the holder for a portable information terminal according to the embodiment.
FIG. 7 is an exterior view illustrating a state of use of the holder for a portable information terminal according to the embodiment, and illustrates a state in which the holder is mounted to a case for a portable information terminal.
FIG. 8 is an exterior view illustrating a state of use of the holder for a portable information terminal according to the embodiment, and illustrates a state viewed from an angle that differs from FIG. 7.
FIG. 9 is an exterior view illustrating a state of use of the holder for a portable information terminal according to the embodiment, and illustrates another example of a fixing mechanism of a case-side band portion to a case.

### [Description of Embodiments]

Hereafter, a holder for a portable information terminal according to an embodiment of a present invention will be described with reference to the drawings. The present embodiment is illustrated taking a smartphone as an example of the portable information terminal.

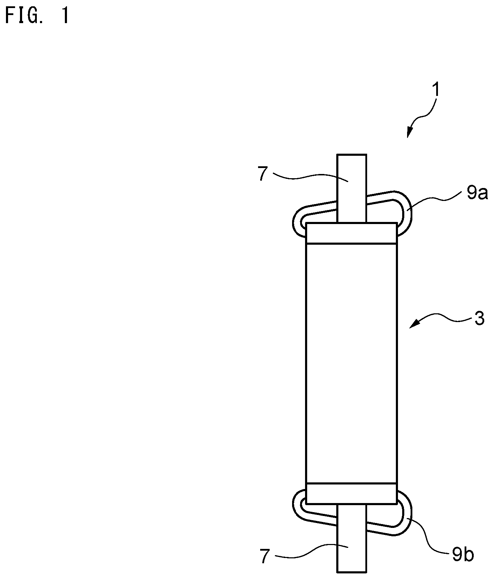

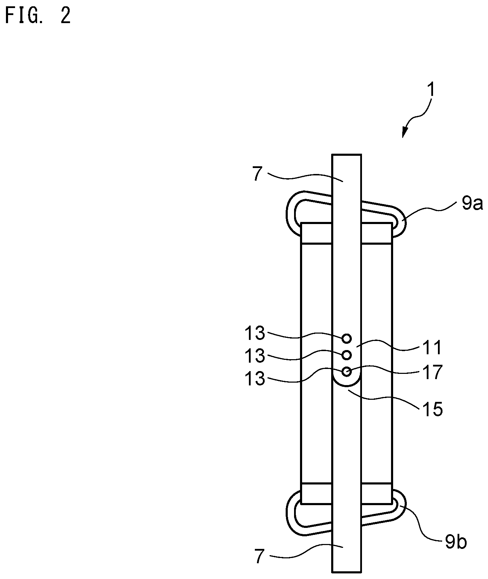

FIGs. 1 and 2 are a front view and a rear view of a holder for a portable information terminal according to the embodiment.

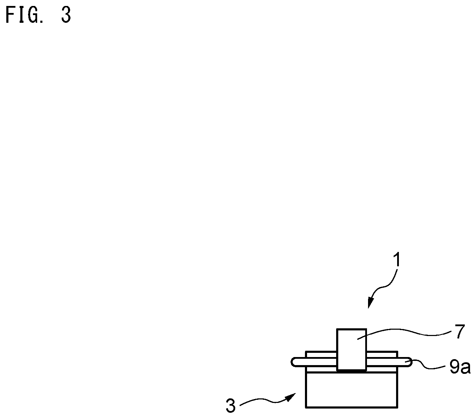

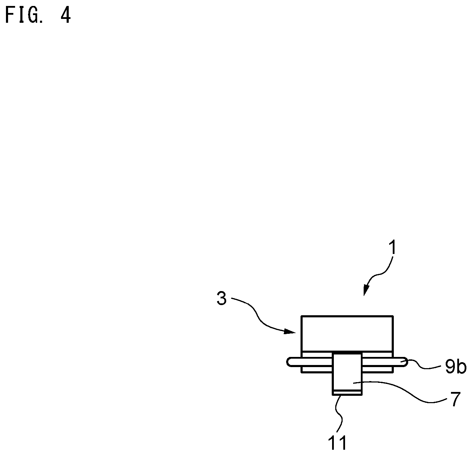

FIGs. 3 and 4 are a plan view and a bottom view of the holder for a portable information terminal according to the embodiment.

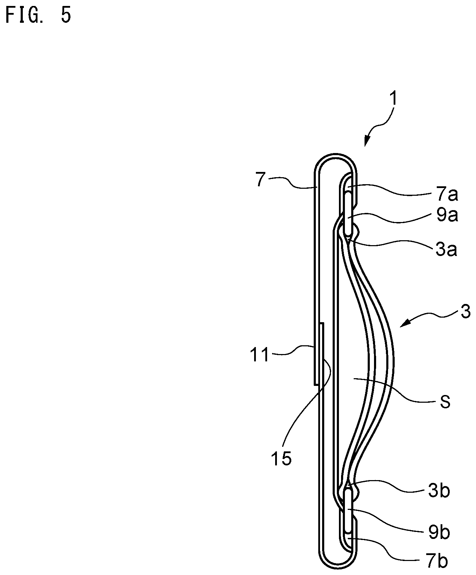

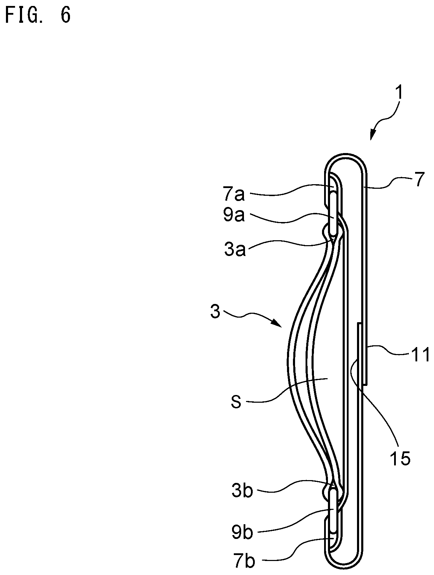

FIGs. 5 and 6 are a left side view and a right side view of the holder for a portable information terminal according to the embodiment.

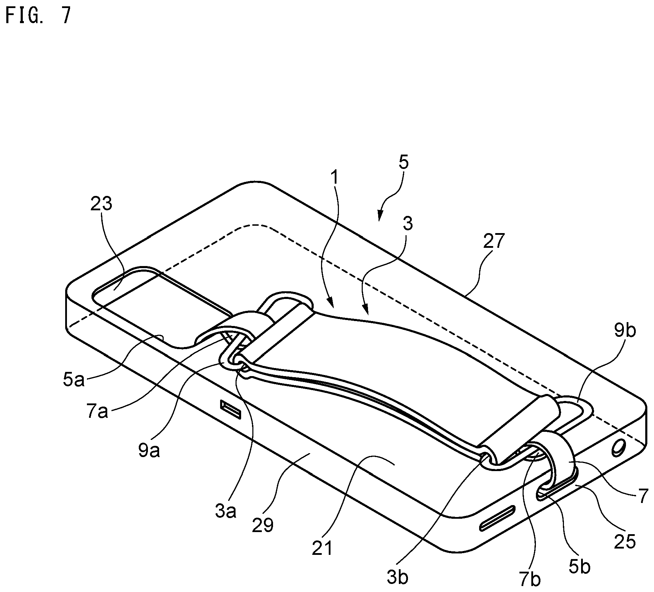

FIG. 7 is an exterior view illustrating a state of use of the holder for a portable information terminal according to the embodiment, and illustrates a state in which the holder is mounted to a case for a portable information terminal.

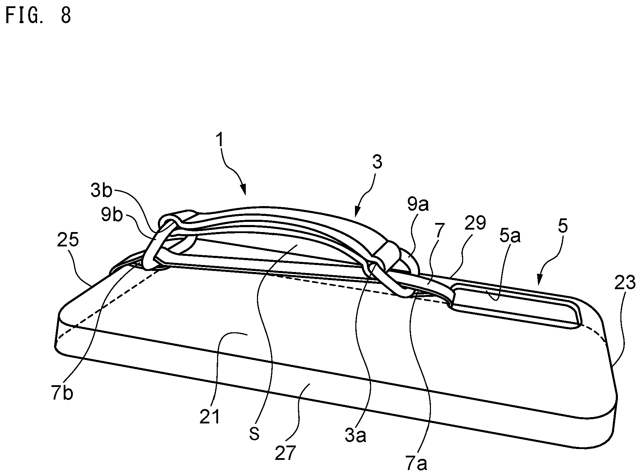

FIG. 8 is an exterior view illustrating a state of use of the holder for a portable information terminal according to the embodiment, and illustrates a state viewed from an angle that differs from FIG. 7.

A holder for a portable information terminal 1 according to the present embodiment, hereinafter referred to as "holder 1" for convenience of description, includes a hand-side holding portion 3 that comes into contact with a fingernail-side portion of a hand or a back of a hand, a case-side band portion 7 for attaching the hand-side holding portion 3 to a case for a portable information terminal 5 (refer to FIGs. 7 and 8), hereinafter referred to as "case 5" for convenience of description, and a pair of ring-shaped members 9a and 9b for attaching the hand-side holding portion 3 to the case-side band portion 7.

A length of the hand-side holding portion 3 in a longitudinal direction has a length extending from a vicinity of an opening for lenses 5a on an upper portion of the case 5 and reaching a vicinity of an opening for a cable 5b on a lower portion thereof, in a state where the holder 1 is attached to the case 5 as illustrated in FIGs 7 and 8. This length corresponds to a length that sufficiently covers a width from a second finger to a fifth finger of an adults' palm. Further, a short direction dimension of the hand-side holding portion 3 is approximately 1/3 the dimension of the longitudinal direction length of the hand-side holding portion 3.

The hand-side holding portion 3 is formed in a state where two layers of fabric with a core material not shown are superposed. Specifically, end portions of one sheet of long fabric having a core material are sewn together and connected, or bonded together and connected into a loop shape, and the loop-shaped fabric is formed into an arc-shape in which two fabrics are superposed as illustrated in FIGs. 5 and 6. Then, in this state, the superposed fabric is sewn together, or bonded together, at a vicinity of each end portion of the fabric in the longitudinal direction, such that the respective end portions of the fabric in the longitudinal direction form a first tubular portion 3a and a second tubular portion 3b that are formed to pass through in the short direction. In the present embodiment, the superposed fabric of the portion between the above-described sewn portions or the bonded portions at the vicinity of the end portions in the longitudinal direction are not sewn together, but they may also be sewn together. The hand-side holding portion 3 is formed in a bow shape that is expanded toward an outer side of the case 5 in a state where the holding portion 1 is attached to the case 5. The material of the core material is not limited. For example, various materials such as metal and paper material may be used.

Further, instead of the cloth having a core material, leather may be used to form the hand-side holding portion 3.

The case-side band portion 7 is formed of a rubber member. The length of the case-side band portion 7 in the longitudinal direction has a length extending from the opening for lenses 5a on the upper portion of the case 5 and reaching the opening for a cable 5b on the lower portion thereof in a state where the holder 1 is attached to the case 5 as illustrated in FIGs. 7 and 8. A short direction dimension of the case-side band portion 7 is proximately 1/3 the dimension of the short direction dimension of the hand-side holding portion 3.

The case-side band portion 7 is a strip of rubber member that is disposed to extend in the longitudinal direction, and on an intermediate portion thereof are formed a first tubular portion 7a and a second tubular portion 7b that are formed to pass through in the short direction, as illustrated in FIGs. 5 and 6. A distance between the first tubular portion 7a and the second tubular portion 7b is equivalent to the longitudinal direction dimension of the hand-side holding portion 3.

A through hole 13 that is passed through the case-side band portion 7 is formed on an end portion 11 on one side of the case-side band portion 7. In the present embodiment, three through holes 13 are formed. One projected portion 17 is formed on an end portion 15 on the other side of the case-side band portion 7. The projected portion 17 may be fit to the through holes 13. As described below, in a state where the holder 1 is attached to the case 5, the projected portion 17 is fit to one of the through holes 13, by which the holder 1 may be fixed to the case 5 without any backlash.

The hand-side holding portion 3 is attached to the case-side band portion 7 through a pair of ring-shaped members 9a and 9b. Specifically, the first ring-shaped member 9a is arranged to pass through the first tubular portion 3a of the hand-side holding portion 3 and the first tubular portion 7a of the case-side band portion 7, by which the first tubular portion 3a of the hand-side holding portion 3 and the first tubular portion 7a of the case-side band portion 7 are connected. The first ring-shaped member 9a and the first tubular portion 3a of the hand-side holding portion 3 are connected in a relatively rotatable manner. The first ring-shaped member 9a and the first tubular portion 7a of the case-side band portion 7 are connected in a relatively rotatable manner.

Similarly, the second ring-shaped member 9b is arranged to pass through the second tubular portion 3b of the hand-side holding portion 3 and the second tubular portion 7b of the case-side band portion 7, by which the second tubular portion 3b of the hand-side holding portion 3 and the second tubular portion 7b of the case-side band portion 7 are connected. The second ring-shaped member 9b and the second tubular portion 3b of the hand-side holding portion 3 are connected in a relatively rotatable manner. The second ring-shaped member 9b and the second tubular portion 7b of the case-side band portion 7 are connected in a relatively rotatable manner.

The first and second ring-shaped members 9a and 9b are formed of metal, and have an openable/closable structure. By using such ring-shaped members 9a and 9b, the hand-side holding portion 3 may be detached easily from the case-side band portion 7, and the detached hand-side holding portion 3 may be attached easily to the case-side band portion 7. Therefore, maintenance operations such as cleaning and replacement of the hand-side holding portion 3 are facilitated. Carabiners may be used as the first and second ring-shaped members 9a and 9b.

Next, a method for attaching the holder 1 to the case 5 will be described.

The case 5 is formed of materials such as synthetic resin and metal. The case 5 is composed of a main body portion 21 having a rectangular plate shape, an upper wall portion 23 formed at an upper edge portion of the main body portion 21, a lower wall portion 25 formed at a lower edge portion of the main body portion 21, and a right side wall portion 27 and a left side wall portion 29 respectively connecting either end of the upper wall portion 23 and either end of the lower wall portion 25 in the up-down direction. The case 5 is formed in a rectangular dish shape by the main body portion 21, the upper wall portion 23, the lower wall portion 25, the right side wall portion 27, and the left side wall portion 29, and in an interior thereof is accommodated a smartphone serving as a portable information terminal not shown. Specifically, the smartphone is accommodated such that a back surface, i.e., surface opposite to a screen, of the smartphone is in contact with an inner side surface of the main body portion 21, and an upper side surface, a lower side surface, a right side surface, and a left side surface of the smartphone respectively come into contact with inner circumference surfaces of the upper wall portion 23, the lower wall portion 25, the right side wall portion 27, and the left side wall portion 29 of the case 5. The opening for lenses 5a is disposed at a portion of the main body portion 21 that corresponds to the lenses of the smartphone. Further, the opening for a cable 5b is provided on the lower wall portion 25.

In order to attach the holder 1 according to the present embodiment to the case 5, at first, the end portion 11 on one side of the case-side band portion 7 is inserted to the inner side of the case 5 through the lens-side opening 5a on the case 5, and the end portion 15 on the other side of the case-side band portion 7 is inserted to the inner side of the case 5 through the opening for a cable 5b on the case 5. Then, the projected portion 17 on the end portion 15 on the other side of the case-side band portion 7 is inserted and fit to any one of the through holes 13 on the end portion 11 on one side of the case-side band portion 7 at the inner side of the main body portion 21. In this state, the projected portion 17 and the through hole 13 are fit to each other such that the case-side band portion 7 is in a state elastically deformed in an extending direction. Thereby, the case-side band portion 7 is fixed to the case 5 between the lens-side opening 5a and the opening for a cable 5b by an elastic returning force in a direction coming into close contact with the outer side surface and the inner side surface of the main body portion 21. Thereby, the holder 1 is fixed to the case 5 without any backlash. As described above, the holder 1 is mounted onto the case 5. Thereafter, the smartphone is accommodated in the inner side of the case 5.

As described above, in a state where the holder 1 is attached to the case 5, the hand-side holding portion 3 is in a bow shape that expands to the outer side of the case 5. When gripping the smartphone not shown accommodated in the case 5, a hand is put into a space S between the hand-side holding portion 3 and the case-side band portion 7 arranged on an outer side surface of the main body portion 21, and the case 5 is gripped by the fingers and palm of the hand. Thereby, the smartphone may be held stably, and dropping thereof may be prevented.

The holder 1 according to the present embodiment has the hand-side holding portion 3 formed of a fabric member arranged at a portion with which the fingers of a hand or a back of a hand come into contact, such that the hand will not be squeezed by the hand-side holding portion 3. Therefore, the hand will not be hurt even after using the holder for a long period of time. Further, the hand-side holding portion 3 is attached to the case-side band portion 7 by the ring-shaped members 9a and 9b, and the first and second through holes 3a and 3b through which the ring-shaped members 9a and 9b pass are composed by forming one sheet of fabric having a core material into a loop shape, superposing two sheets of such fabric to form an arc shape, and having both end portions of the fabric in this state form the first and second through holes 3a as described above, such that they are formed extremely firmly. Therefore, the holder 1 has superior durability. Further, since adhesives or adhesive sheets are not used to attach the holder 1 to the case 5, even after detaching the holder 1 from the case 5, adhesives and adhesive sheets will not remain on the case 5.

Further, since the hand-side holding portion 3 has a core material disposed therein, it is relatively not easily deformed. According to this configuration, by detaching the lower side ring-shaped member 9b from the case-side band portion 7 and placing the ring-shaped member 9b on the ground, the holder 1 may be used as a smartphone stand.

Further, since the hand-side holding portion 3 is formed of fabric or leather, it may be arbitrarily exchanged with those having preferable colors and patterns. Thereby, fashionableness of the holder may be enhanced.

Further, by providing pockets or zippers on the hand-side holding portion 3, storage functions may be added to the hand-side holding portion 3.

As described above, according to the holder 1 of the present embodiment, a holder for a portable information terminal that enables a portable information terminal to be held stably, that has superior durability, and that does not cause the hand to be hurt even after being used for a long time may be provided.

The present invention is not limited to the embodiment described above, and various modifications are possible. For example, each end portion of the hand-side holding portion 3 is attached by one ring-shaped member to the case-side band portion 7, but it is possible to have each end portion attached through a plurality of ring-shaped members to the case-side band portion 7. Further, the case-side band portion 7 is fixed to the case 5 through fitting of the through holes 13 and the projected portion 17, but the fixing may be realized by other mechanisms. Another example of a fixing mechanism of the case-side band portion 7 to the case 5 is described below.

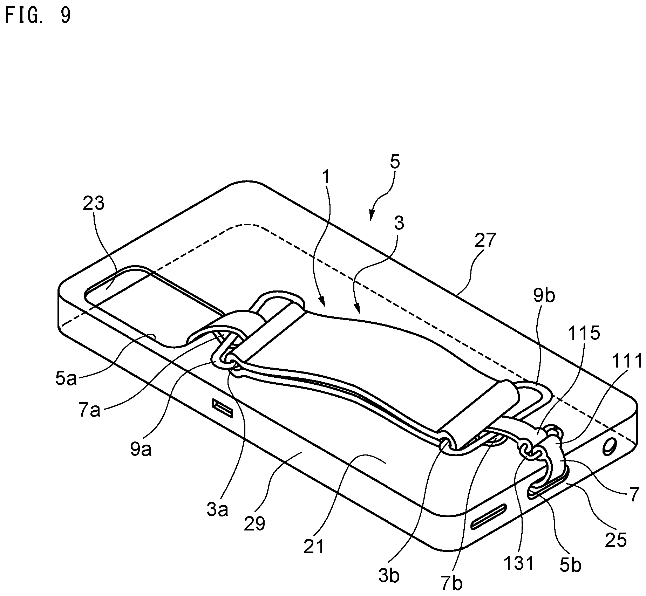

FIG. 9 is an exterior view illustrating an example of state of use of the holder for a portable information terminal according to an embodiment, which is another example of a fixing mechanism of a case-side band portion to a case.

As illustrated in FIG. 9, both end portions 111 and 115 of the case-side band portion 7 are formed in a tubular shape that are passed through in a short direction. The case-side band portion 7 adopts a C-ring 131 made of metal to connect both end portions 111 and 115 having tubular shapes, through which the case-side band portion 7 is fixed to the case 5. The present invention can adopt such a configuration.

### [Reference Signs List]

1 holder for portable information terminal
3 hand-side holding portion
3a first tubular portion
3b second tubular portion
5 case for portable information terminal
5a opening for lenses
5b opening for cable
7 case-side band portion
7a first tubular portion
7b second tubular portion
9a first ring-shaped member
9b second ring-shaped member
13 through hole
17 projected portion
131 C-ring

## Claims

1. A holder for a portable information terminal comprising:
a band portion configured to be attached to a case for a portable information terminal in which a portable information terminal is held; and
a hand-side holding portion configured to be attached to the band portion and to come into contact with a finger or a back of a hand,
wherein the band portion is fixed to the case by an elastic force of the band portion, and
wherein the hand-side holding portion has both end portions thereof respectively connected to the band portion by a ring-shaped member.

2. The holder for a portable information terminal according to claim 1, wherein the hand-side holding portion is composed of a fabric member including a core material.

3. The holder for a portable information terminal according to claim 2, wherein the hand-side holding portion includes the fabric member formed of a long fabric formed into a loop shape, and wherein two sheets of the fabric are superposed into an arc shape.

4. The holder for a portable information terminal according to claim 3, wherein the ring-shaped member is held by a tubular portion formed at both end portions of the fabric member having the arc shape.

5. The holder for a portable information terminal according to claim 1, wherein the ring-shaped member includes an opening and closing mechanism.
